# EUROPEAN PATENT APPLICATION

(11) **EP 4 718 809 A1**
(43) Date of publication of application: **01.04.2026**
(21) Application number: 24822337.2
(22) Date of filing: 26.03.2024
(51) Int. Cl.: H04L 45/00

(54) **METHOD FOR DETERMINING VALIDITY OF CANDIDATE PATH, AND ELECTRONIC DEVICE AND STORAGE MEDIUM**

(30) Priority: 12.06.2023 CN 202310696497
(71) Applicant: ZTE Corporation, Shenzhen, Guangdong 518057 (CN)
(72) Inventor: ZHAO, Detao, Shenzhen, Guangdong 518057 (CN); CHEN, Ran, Shenzhen, Guangdong 518057 (CN)
(74) Representative: Aipex B.V.
(86) International application number: PCT/CN2024/083900
(87) International publication number: WO 2024/255382

(57) **Abstract**

Provided are a method for determining validity of a candidate path, an electronic device, and a storage medium. The method includes acquiring a validity control parameter for a candidate path under a segment routing policy; and determining validity of the candidate path according to the validity control parameter, where in response to the candidate path satisfying the validity control parameter, the candidate path is valid.

## Description

### TECHNICAL FIELD

The present application relates to wireless communication networks, for example, a method for determining validity of a candidate path, an electronic device, and a storage medium.

### BACKGROUND

Segment routing (SR) utilizes a source routing mechanism to encapsulate an ordered list of instructions at a head node to instruct packet forwarding. An SR policy is a management entity of the ordered list of instructions. The ordered list of instructions is referred to as a segment list (SL). The framework of the SR policy is defined in a standardized manner as follows: each SR policy may have one or more candidate paths (CPs), and each CP may include one or more SLs. As long as one SL in a CP is valid, the CP is considered valid. Each SL has a weight, and traffic carried by a CP is shared among all SLs in the CP according to their respective weights.

In some scenarios, the manner for determining the validity of the CP cannot satisfy the requirements. For example, a CP carries 200 MB of traffic, which is shared between two SLs of 100 MB each. If one SL fails, the remaining SL cannot carry 200 MB of traffic. Therefore, the CP is essentially invalid. Therefore, the validity of the CP is determined with relatively low reliability.

### SUMMARY

The present application provides a method for determining validity of a candidate path, an electronic device, and a storage medium.

An embodiment of the present application provides a method for determining validity of a candidate path. The method includes the operations below.

A validity control parameter for a candidate path under an SR policy is acquired.

Validity of the candidate path is determined according to the validity control parameter, where in response to the candidate path satisfying the validity control parameter, the candidate path is valid.

An embodiment of the present application provides a communication node. The communication node includes a memory, a processor, and a computer program stored in the memory and executable by the processor, where the processor, when executing the computer program, performs the preceding method for determining validity of a candidate path.

An embodiment of the present application provides a computer-readable storage medium having a computer program stored thereon, where the computer program, when executed by a processor, causes the processor to perform the method for determining validity of a candidate path.

### BRIEF DESCRIPTION OF DRAWINGS

FIG. 1 is a flowchart of a method for determining validity of a candidate path according to an embodiment.
FIG. 2 is a schematic diagram of a format of a set sub-domain according to an embodiment.
FIG. 3 is a schematic diagram illustrating the determination of validity of a candidate path according to a validity control parameter according to an embodiment.
FIG. 4 is a structural diagram of an apparatus for determining validity of a candidate path according to an embodiment.
FIG. 5 is a structural diagram of hardware of a communication node according to an embodiment.

### DETAILED DESCRIPTION

The present application is described hereinafter in conjunction with the drawings and embodiments. It is to be understood that the embodiments described herein are intended to explain the present application and not to limit the present application. It is to be noted that if not in collision, the embodiments of the present application and features therein may be combined with each other in any manner. Additionally, it is to be noted that for ease of description, only part, not all, of structures related to the present application are illustrated in the drawings.

In an existing method, as long as one SL in a candidate path is valid, the candidate path is considered valid. However, one or more valid SLs in the candidate path may fail to satisfy traffic requirements, for example, may be insufficient to carry traffic and fail to achieve sharing. The present application provides a method for determining validity of a candidate path so that the validity of the candidate path can be determined more reliably, ensuring that the candidate path has sufficient SLs to achieve sharing.

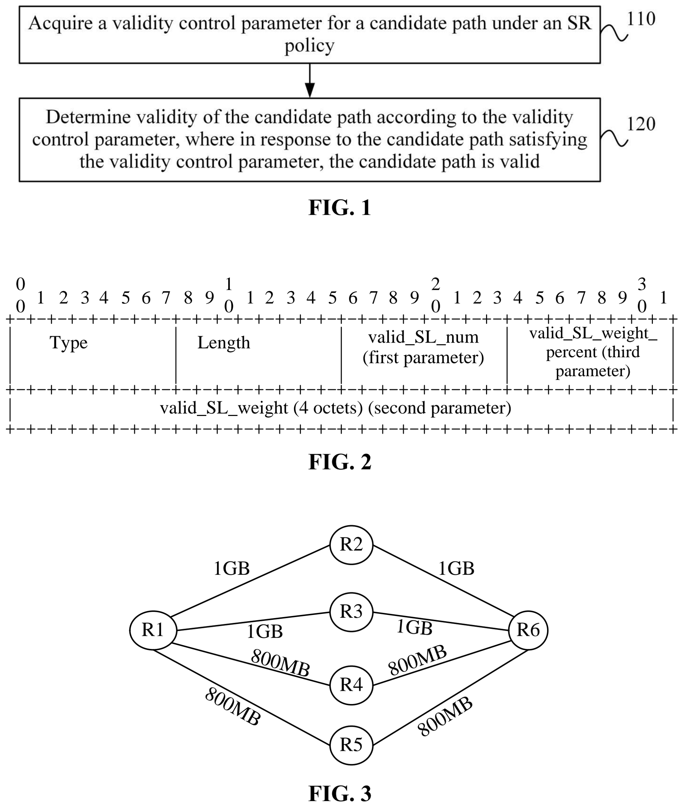

FIG. 1 is a flowchart of a method for determining validity of a candidate path according to an embodiment. As shown in FIG. 1, the method of this embodiment includes 110 and 120.

In 110, a validity control parameter for a candidate path under an SR policy is acquired.

In 120, validity of the candidate path is determined according to the validity control parameter, where in response to the candidate path satisfying the validity control parameter, the candidate path is valid.

In this embodiment, the validity control parameter is used for determining whether the candidate path is valid and may include parameters for limiting the number of valid SLs in the candidate path and weights corresponding to the valid SLs, to ensure that the candidate path has sufficient SLs or the valid SLs have sufficiently high weights, thereby achieving effective load sharing and satisfying traffic requirements. For example, the validity control parameter may include a minimum value of the number of valid SLs in the candidate path, a minimum value of the weights of the valid SLs, a minimum value of a sum of weights of the valid SLs, the ratio of the valid SLs to all SLs, or the ratio of the sum of weights of the valid SLs to a sum of weights of all the SLs. Additionally, multiple validity control parameters may be provided to further ensure the reliability of validity determination.

In an embodiment, the validity control parameter includes a first parameter; and in response to the number of valid SLs in the candidate path being greater than or equal to the first parameter, the candidate path is valid.

In this embodiment, the first parameter may be added for the candidate path to control the validity determination of the candidate path. A field of the first parameter may be denoted as valid_SL_num, which may be an 8-bit integer with a value range of 1 to 0xff and represents a minimum value of the number of valid SLs in a valid candidate path. If the number of valid SLs in the candidate path is greater than or equal to a value of this field, the candidate path is determined to be valid. If the value of this field is 0xff, it indicates that the candidate path is determined to be valid if all the SLs in the candidate path are valid.

In an embodiment, the validity control parameter includes a second parameter; and in response to the sum of weights of the valid SLs in the candidate path being greater than or equal to the second parameter, the candidate path is valid.

In this embodiment, the second parameter may be added for the candidate path to control the validity determination of the candidate path. A field of the second parameter may be denoted as valid_SL_weight, which may be a 32-bit integer with a value range of 0 to 0xffffffff and represents a minimum value of a sum of weights of the valid SLs in the valid candidate path. If the sum of weights of the valid SLs in the candidate path is greater than or equal to a value of this field, the candidate path is determined to be valid. If the value of this field is 0, it indicates that no requirement is imposed on the weights. If the value of this field is 0xffffffff, it indicates that the candidate path is determined to be valid when all the SLs in the candidate path are valid.

In an embodiment, the validity control parameter includes a third parameter; and in response to the sum of weights of the valid SLs in the candidate path being greater than or equal to the third parameter, the candidate path is valid.

In this embodiment, the third parameter may be added for the candidate path to control the validity determination of the candidate path. A field of the third parameter may be denoted as valid_SL_weight_percent, which may be an integer with a value range of 0 to 100 and represents a minimum value of a percentage of the sum of weights of the valid SLs in the valid candidate path relative to a sum of weights of all SLs in the valid candidate path. If a percentage of the sum of weights of the valid SLs in the candidate path relative to the sum of weights of all the SLs in the candidate path is greater than or equal to a value of this field, the candidate path is determined to be valid. If the value of this field is 0, it indicates that no requirement is imposed on the weight percentage. If the value of this field is 100, it indicates that the candidate path is determined to be valid when all the SLs in the candidate path are valid.

In an embodiment, the validity control parameter includes the first parameter, the second parameter, and the third parameter; and in response to the number of valid SLs in the candidate path being greater than or equal to the first parameter, the sum of weights of the valid SLs in the candidate path being greater than or equal to the second parameter, and the sum of weights of the valid SLs in the valid candidate path being greater than or equal to the third parameter, the candidate path is valid.

In this embodiment, three validity control parameters (the first parameter, the second parameter, and the third parameter) may be added for the candidate path. If the valid SLs in the candidate path satisfy the three validity control parameters, the candidate path is determined to be valid.

In an embodiment, the validity control parameter of the candidate path may be notified through an extension in a protocol such as, but not limited to, a Border Gateway Protocol (BGP), an SR Policy and Tunnel Encapsulation Attribute in a BGP SR policy (BGP- Link State (BGP-LS)), a Path Computation Element Protocol (PCEP) SR policy, a Network Configuration Protocol (NETCONF) / Yet Another Next Generation (YANG).

In an embodiment, acquiring the validity control parameter of the SR policy includes acquiring the validity control parameter based on a set sub-domain (that is, type-length-value (TLV)) in the SR Policy and Tunnel Encapsulation Attribute in the BGP SR policy.

In this embodiment, the BGP SR policy supports the notification of the validity control parameter of the candidate path, and the set sub-domain (denoted as cp_valid_control_parameter Sub-TLV) may be added in the SR Policy and Tunnel Encapsulation Attribute to carry the validity control parameter of the candidate path.

In an embodiment, acquiring the validity control parameter of the SR policy includes acquiring the validity control parameter based on a set sub-domain in the BGP-LS SR policy.

In this embodiment, the BGP-LS SR policy supports the notification of the validity control parameter of the candidate path, and the set sub-domain (denoted as cp_valid_control_parameter TLV) may be added in the BGP-LS SR policy to carry the validity control parameter of the candidate path.

In an embodiment, acquiring the validity control parameter of the SR policy includes acquiring the validity control parameter based on a set sub-domain in the PCEP SR policy.

In this embodiment, the PCEP SR policy supports the notification of the validity control parameter of the candidate path, and the set sub-domain (denoted as cp_valid_control_parameter TLV) may be added in the PCEP SR policy to carry the validity control parameter of the candidate path.

FIG. 2 is a schematic diagram of a format of a set sub-domain according to an embodiment. As shown in FIG. 2, in the set sub-domain, the Value may include the first parameter (valid SL num), the second parameter (valid SL weight), and the third parameter (valid SL weight percent).

FIG. 3 is a schematic diagram illustrating the determination of validity of a candidate path according to a validity control parameter according to an embodiment. As shown in FIG. 3, an SR policy to R6 is created on R1, and the SR policy carries 1.5 GB of traffic. The SR policy includes two candidate paths: a candidate path CP1 has a priority of 200 and includes SL1<R2, R6> and SL2<R3, R6>, and a candidate path CP2 has a priority of 100 and includes SL3<R4, R6> and SL4<R5, R6>. The SR policy preferentially selects CP1 as an active candidate path to carry the traffic. After CP1 fails, CP2 may be used as the active candidate path to carry the traffic. The p_valid_control_parameter of CP1 and CP2 is set to be valid_SL_num = 2. When the node R2 fails, an SL fails, and the number of valid SLs in CP1 is only 1 and less than valid_SL_num set to 2. Therefore, the node R1 sets CP1 to be invalid and switches the traffic to CP2, avoiding traffic interruption.

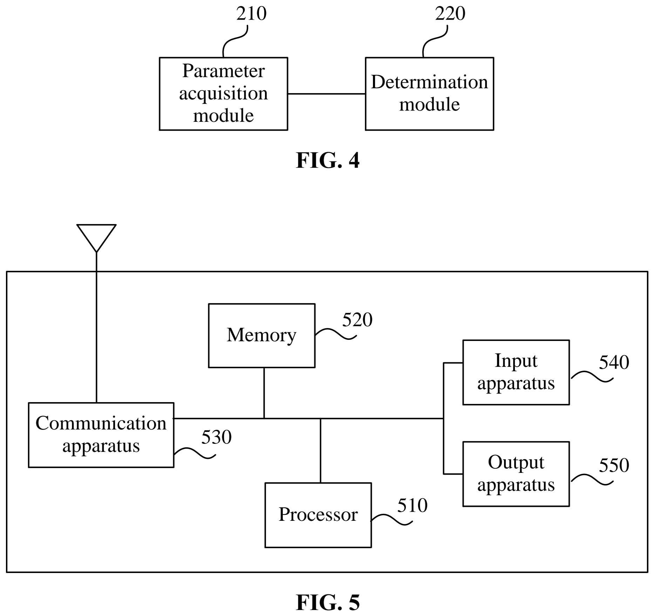

An embodiment of the present application provides an apparatus for determining validity of a candidate path. FIG. 4 is a structural diagram of an apparatus for determining validity of a candidate path according to an embodiment. As shown in FIG. 4, the apparatus for determining validity of a candidate path includes a parameter acquisition module 210 and a determination module 220.

The parameter acquisition module 210 is configured to acquire a validity control parameter for a candidate path under an SR policy.

The determination module 220 is configured to determine validity of the candidate path according to the validity control parameter, where in response to the candidate path satisfying the validity control parameter, the candidate path is valid.

The apparatus for determining the validity of a candidate path in this embodiment determines the validity of the candidate path according to the validity control parameter, ensuring the reliability of validity determination.

In an embodiment, the validity control parameter includes a first parameter.

In response to the number of valid SLs in the candidate path being greater than or equal to the first parameter, the candidate path is valid.

In an embodiment, the validity control parameter includes a second parameter.

In response to a sum of weights of the valid SLs in the candidate path being greater than or equal to the second parameter, the candidate path is valid.

In an embodiment, the validity control parameter includes a third parameter.

In response to the sum of weights of the valid SLs in the candidate path being greater than or equal to the third parameter, the candidate path is valid.

In an embodiment, the validity control parameter includes the first parameter, the second parameter, and the third parameter.

In response to the number of valid SLs in the candidate path being greater than or equal to the first parameter, the sum of weights of the valid SLs being greater than or equal to the second parameter, and the sum of weights of the valid SLs in a valid candidate path being greater than or equal to the third parameter, the candidate path is valid.

In an embodiment, the parameter acquisition module 210 is configured to acquire the validity control parameter based on a set sub-domain in an SR Policy and Tunnel Encapsulation Attribute in a BGP SR policy.

In an embodiment, the parameter acquisition module 210 is configured to acquire the validity control parameter based on a set sub-domain in a BGP-LS SR policy.

In an embodiment, the parameter acquisition module 210 is configured to acquire the validity control parameter based on a set sub-domain in a PCEP SR policy.

The apparatus for determining validity of a candidate path according to this embodiment belongs to the same concept as the method for determining validity of a candidate path according to the preceding embodiments. For technical details not described in detail in this embodiment, reference may be made to any one of the preceding embodiments. Moreover, this embodiment has the same beneficial effects as the performed method for determining validity of a candidate path.

An embodiment of the present application provides a communication node. FIG. 5 is a structural diagram of hardware of a communication node according to an embodiment. As shown in FIG. 5, the communication node of the present application includes a processor 510 and a memory 520. One or more processors 510 may be provided in the communication node, with one processor 510 shown as an example in FIG. 5. The memory 520 is configured to store one or more programs. The one or more programs, when executed by the one or more processors 510, cause the one or more processors 510 to perform the method for determining validity of a candidate path according to an embodiment of the present application.

The communication node further includes a communication apparatus 530, an input apparatus 540, and an output apparatus 550.

The processor 510, the memory 520, the communication apparatus 530, the input apparatus 540, and the output apparatus 550 in the communication node may be connected via a bus or in other manners, and the connection via a bus is shown as an example in FIG. 5.

The input apparatus 540 may be configured to receive inputted digital or character information and generate key signal input related to user settings and function control of the communication node. The output apparatus 550 may include a display device such as a display screen.

The communication apparatus 530 may include a receiver and a sender. The communication apparatus 530 is configured to perform information transceiving communication under the control of the processor 510.

As a computer-readable storage medium, the memory 520 may be configured to store software programs, computer-executable programs, and modules, such as program instructions/modules (for example, the parameter acquisition module 210 and the determination module 220 in the apparatus for determining validity of a candidate path) corresponding to the method for determining validity of a candidate path according to the embodiment of the present application. The memory 520 may include a program storage region and a data storage region, where the program storage region may store an operating system and an application program required by at least one function, and the data storage region may store data and the like created according to the use of the communication node. Additionally, the memory 520 may include a high-speed random-access memory and may also include a nonvolatile memory such as at least one disk memory, a flash memory, or another nonvolatile solid-state memory. In some examples, the memory 520 may further include memories remotely disposed relative to the processor 510, and these remote memories may be connected to the communication node via a network. Examples of the network include, but are not limited to, the Internet, an intranet, a local area network, a mobile communication network, and a combination thereof.

An embodiment of the present application provides a storage medium. The storage medium stores a computer program, where the computer program, when executed by a processor, causes the processor to perform the method for determining validity of a candidate path according to any embodiment of the present application.

The method includes acquiring a validity control parameter of a candidate path of an SR policy; and determining validity of the candidate path according to the validity control parameter, where in response to the candidate path satisfying the validity control parameter, the candidate path is valid.

A computer storage medium according to an embodiment of the present application may be one computer-readable medium or any combination of multiple computer-readable media. The computer-readable medium may be a computer-readable signal medium or a computer-readable storage medium. For example, the computer-readable storage medium may be, but is not limited to, an electrical, magnetic, optical, electromagnetic, infrared, or semiconductor system, apparatus, or device or any combination thereof. Concrete examples (a non-exhaustive list) of the computer-readable storage medium include an electrical connection having one or more wires, a portable computer magnetic disk, a hard disk, a random-access memory (RAM), a read-only memory (ROM), an erasable programmable read-only memory

(EPROM), a flash memory, an optical fiber, a portable compact disc read-only memory (CD-ROM), an optical memory, a magnetic memory, and any suitable combination thereof. The computer-readable storage medium may be any tangible medium including or storing a program. The program may be used by or used in conjunction with an instruction execution system, apparatus, or device.

The computer-readable signal medium may include a data signal propagated in a baseband or as part of a carrier. The data signal carries computer-readable program codes. The data signal propagated in this manner may be in multiple forms, including, but not limited to, an electromagnetic signal, an optical signal, or any suitable combination thereof. The computer-readable signal medium may be any computer-readable medium other than the computer-readable storage medium. The computer-readable medium may send, propagate, or transmit a program used by or used in conjunction with an instruction execution system, apparatus, or device.

Program codes included in the computer-readable medium may be transmitted by any suitable medium including, but not limited to, a wireless medium, a wire, an optical cable, a radio frequency (RF), or any suitable combination thereof.

Computer program codes for performing operations of the present application may be written in one or more programming languages or a combination thereof. The programming languages include object-oriented programming languages such as Java, Smalltalk, and C++ and may further include conventional procedural programming languages such as "C" and similar programming languages. Program codes may be executed entirely on a user computer, executed partly on a user computer, executed as a standalone software package, executed partly on a user computer and partly on a remote computer, or executed entirely on a remote computer or a server. In the case where the remote computer is involved, the remote computer may be connected to the user computer via any type of network including a local area network (LAN) or a wide area network (WAN) or may be connected to an external computer (for example, via the Internet provided by an Internet service provider).

Example embodiments of the present application are described above and are not intended to limit the scope of the present application.

It is to be understood by those skilled in the art that the term "user equipment" encompasses any appropriate type of wireless user device, such as a mobile phone, a portable data processing apparatus, a portable web browser, or a vehicle-mounted mobile station.

Generally speaking, embodiments of the present application may be implemented in hardware or special-purpose circuits, software, logic, or any combination thereof. For example, some aspects may be implemented in hardware while other aspects may be implemented in firmware or software executable by a controller, a microprocessor, or another computing apparatus, though the present application is not limited thereto.

Embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present application may represent program operations, may represent interconnected logic circuits, modules, and functions, or may represent a combination of program operations and logic circuits, modules, and functions. Computer programs may be stored in a memory. The memory may be of any type suitable for a local technical environment and may be implemented using any suitable data storage technology, such as, but not limited to, a ROM, a RAM, or an optical memory apparatus and system (for example, a digital video disc (DVD) or a compact disc (CD)). Computer-readable media may include non-transitory storage media. The data processor may be of any type suitable for the local technical environment, such as, but not limited to, a general-purpose computer, a special-purpose computer, a microprocessor, a digital signal processor (DSP), an application-specific integrated circuit (ASIC), a field-programmable gate array (FPGA), and a processor based on a multi-core processor architecture.

## Claims

1. A method for determining validity of a candidate path, comprising:
acquiring a validity control parameter for a candidate path under a segment routing, SR, policy; and
determining the validity of the candidate path according to the validity control parameter, and
determining that the candidate path is valid in response to the candidate path satisfying the validity control parameter.

2. The method of claim 1, wherein the validity control parameter comprises a first parameter; and
in response to the number of valid segment lists in the candidate path being greater than or equal to the first parameter, the candidate path is valid.

3. The method of claim 1, wherein the validity control parameter comprises a second parameter; and
in response to a sum of weights of valid segment lists in the candidate path being greater than or equal to the second parameter, the candidate path is valid.

4. The method of claim 1, wherein the validity control parameter comprises a third parameter; and
in response to a sum of weights of valid segment lists in the candidate path being greater than or equal to the third parameter, the candidate path is valid.

5. The method of claim 1, wherein the validity control parameter comprises a first parameter, a second parameter, and a third parameter; and
in response to the number of valid segment lists in the candidate path being greater than or equal to the first parameter, a sum of weights of the valid segment lists being greater than or equal to the second parameter, and a sum of weights of valid segment lists in a valid candidate path being greater than or equal to the third parameter, the candidate path is valid.

6. The method of claim 1, wherein acquiring the validity control parameter of the SR policy comprises:
acquiring the validity control parameter based on a set sub-domain in an SR Policy and Tunnel Encapsulation Attribute in a Border Gateway Protocol, BGP, SR policy.

7. The method of claim 1, wherein acquiring the validity control parameter of the SR policy comprises:
acquiring the validity control parameter based on a set sub-domain in a Border Gateway Protocol - Link State, BGP-LS, SR policy.

8. The method of claim 1, wherein acquiring the validity control parameter of the SR policy comprises:
acquiring the validity control parameter based on a set sub-domain in a Path Computation Element Protocol, PCEP, SR policy.

9. An electronic device, comprising:
at least one processor; and
a storage apparatus configured to store at least one program;
wherein the at least one program, when executed by the at least one processor, causes the at least one processor to perform the method for determining validity of a candidate path of any one of claims 1 to 8.

10. A computer-readable storage medium having a computer program stored thereon, wherein the computer program, when executed by a processor, causes the processor to perform the method for determining validity of a candidate path of any one of claims 1 to 8.
